# EUROPEAN PATENT APPLICATION

(11) **EP 1 801 681 A1**
(43) Date of publication of application: **27.06.2007**
(21) Application number: 05112440.2
(22) Date of filing: 20.12.2005
(51) Int. Cl.: G05B 19/418

(54) **An industrial system comprising an industrial robot and a machine receiving movement instructions from the robot controller**

(71) Applicant: ABB AB, 721 83 Västerås (SE)
(72) Inventor: Johansson, Görgen, 722 46 Västerås (SE)
(74) Representative: Reyier, Ann-Mari

(57) **Abstract**

An industrial system comprising a machine (1) for processing or producing a product, the machine including at least one actuator (7) providing a repetitive sequence of movements of a machine part (6), and a regulator (8) controlling the movements of the actuator in response to a reference value (Ref), and an industrial robot (2) adapted to tend the machine, such as to remove the product from the machine, the robot including a drive unit and a robot controller (4) adapted to generate control signals to the drive unit based on a control program including movement instructions for the robot. The robot controller is adapted to generate the reference value to the regulator based on a control program including movement instructions for said machine part. The said regulator (8) may also be an integrated part of the robot controller.

## Description

### FIELD OF THE INVENTION

The present invention relates to an industrial system comprising a machine for processing, or producing a product, the machine including an actuator providing a repeated sequence of movements of a machine part, and a robot adapted to tend the machine.

The present invention is suitable for any type of industrial process, which makes use of a machine that is tended by a robot. Suitable processes are for example die casting, injection molding, and other types of metal forming and plastic machinery, loading and unloading of milling machines, lathes, grinding equipment, and arc welding.

### PRIOR ART

In many industrial applications an industrial robot is used for tending a machine, for example to remove products produced by the machine. Such an application is injection molding, which uses robots to remove molded products from the molding machine. To avoid collisions with the machine, the movements of the robot, such as gripping and release of the product from the machine, must be synchronized with movements of moving parts of the machine. For example, if the machine is an injection-molding machine the moving parts are a protective door that protects the surroundings from spatter, a mould part that opens and closes the mold, and extraction pins that release the product from the mold. Today, collisions and interference between the robot and the machine tended by the robot are avoided by sufficient margins in time and spacious separation of the different part. This has a negative effect on the cycle time.

Generally, this synchronization is achieved by signals provided by the machine and sent to the robot control system. For example, the molding machine sends a signal to the robot when the protective door has been opened and when the mould is opened, and a signal is sent from the robot to the injection-molding machine when the robot has finished removing the product. Upon receipt of this product removal finish signal, the injection-molding machine starts the next molding operation. In this general method for removing a molded product, the robot starts its operation after waiting until the mould has opened completely, and the injection molding machine starts the mould closing operation for the next molding cycle after waiting until the product removing unit has removed the molded product completely. Therefore the waiting time consumes valuable time, and the cycle time of molding is prolonged.

A solution to this problem is proposed in US patent application No. 2004/0005372. This document describes a controller for avoiding interference between a mold body and a product removing unit, such as a robot, in an injection-molding machine. The distance between the mold body and the robot is determined. Then it is judged whether or not the distance between the mold body and the robot is smaller than a predetermined distance. If the distance is smaller than the predetermined distance, the operation of the robot is accelerated or stopped. This controller makes it possible to reduce the margins in time and spacious separation between the robot and the molding machine and thereby to reduce the cycle time. However, it is a desire to further reduces the cycle time.

The European patent application No. 1 085 389 discloses a robot and machine-linked system, wherein the robot is provided with a robot controller and an injection molding machine is provided with a machine controller. The machine controller and the robot controller are connected to each other. This system makes it possible to create robot motion programs on the controller of the injection-molding machine and to send the robot programs to the robot controller and to have the robot operate based on them. It is also possible to enter data for robot motion programs into the controller of the industrial machine and to send the data to the robot controller in order for the robot controller to create robot motion programs.

### OBJECTS AND SUMMARY OF THE INVENTION

An object of the present invention is to provide an industrial system comprising a machine for producing or processing a product and a robot tending the machine, which system makes it possible to further reduce the cycle time for producing or processing the product.

This object is achieved by an industrial system as defined in claim 1.

Such an industrial system comprises a machine for processing or producing a product, the machine including at least one actuator providing a repetitive sequence of movements of a machine part, and a regulator controlling the movements of the actuator in response to a reference value, and an industrial robot adapted to tend the machine, such as to remove a finished product from the machine, the robot including a drive unit and a robot controller adapted to generate control signals to the drive unit based on a control program including movement instructions for the robot. Further, the robot controller is adapted to generate the reference value to the regulator based on a control program including movement instructions for the machine part.

By a sequence of movements is understood a defined sequence of movements, for example opening and closing of a mold, opening and closing of a protective door, ejecting and returning of ejection pins, raising and lowering a tool, such as a drill, and opening and closing of a scrap press. The defined sequence of movements is repeated each cycle. The tending of the machine includes removing the finished product from the machine. The tending of the machine may also include providing the machine with work pieces. The movement of the robot must be synchronized with the movements of the machine part in order to avoid collisions between the robot and the machine. The processing provided by the machine is, for example, drilling, grinding, de-burring, and grading. The actuator of the machine is for example a motor or a hydraulic or pneumatic actuator.

According to the invention, the robot controller generates a reference value for the actuator that actuates the movements of the machine part. Thus, the robot controller generates a reference value for the actuator actuating the movable machine part as well as control signals for the motors of the robot.

Since the movements of the movable machine part are controlled from the same controller as the robot movements, optimization of the cycle time will become much simpler and there is a potential for substantial reduction of cycle time. There is no longer any need for large margins in time and spacious separation between the robot and the machine. The invention also simplifies adjustments of the process performed by the machine. Another advantage achieved by the invention is that only one controller is needed which means that the controller of the machine can be omitted.

The invention makes it possible to control the movements of the robot and the actuator from one single control program. The invention also makes it possible to have one control program for the actuator and another control program for the robot, which programs are run in parallel in synchronous operation on the same controller.

For example, the actuator is adapted to provide opening and closing of a protective door belonging to the machine. Many machines are provided with a protective door in order to protect the surroundings of the machine. The door has to be opened before the robot can reach the product and remove it from the machine. In order to reduce cycle time the robot should penetrate the opening as soon as possible and preferably before the door is completely opened. An optimization of the robot movement and the opening of the door can be achieved thanks to mutual control of the robot and the door.

Preferably, the reference value includes a set point value for the position of the actuator. Thereby, the robot controller controls the position of the machine part as well as the position of the robot.

According to an embodiment of the invention, the reference value includes a set point value for the speed of the actuator. Thereby, the robot controller also controls the speed of the actuator as well as the speed of the robot. For continuous processes, like picking a part from a running belt, a speed adaption is beneficial. This embodiment is also useful for control of the speed for the injection processes in plastic as well as for die casting machines.

According to an embodiment of the invention, the regulator is a pressure regulator and the reference value includes a set point value for the speed and position of the actuator in order to establish a certain pressure build-up. The movable machine part is for example a valve or a piston that controls a pressure in the machine, for example in order to control the pressure in a molding machine during injection molding.

According to an embodiment of the invention, the regulator of the actuator is integrated in the robot controller. This embodiment simplifies plant engineering and installation, increases ease of use, increases performance of internal communication, and decreases overall plant cost.

According to an embodiment of the invention the robot controller comprises program storage for storing control programs including movement instructions for the robot and movement instructions for the machine part. Further, the robot controller comprises a program executor adapted to execute the movement instructions for the robot and the movement instructions for the machine part, and a motion planner adapted to generate control signals to the drive unit of the robot and generate reference values for the actuator. According to this embodiment, the same program executor executes movement instructions for the robot and the machine part, and the same motion planner is used for planning the movement of the robot and the machine part.

According to an embodiment of the invention, the machine includes at least two actuators and two regulators, each regulator regulating the movements of one of the actuators in response to a reference value for the actuator, and the robot controller is adapted to generate reference values for both actuators based on one or more control programs including movement instructions for the machine parts. If the machine includes a plurality of actuators controlling a plurality of movable parts of the machine, it is advantageous if the robot controller controls the movements of all the movable parts. Thereby, synchronization of the movements and optimization of cycle time are simplified.

Another object of the present invention is to provide a method for controlling an industrial system comprising a machine for producing or processing a product and a robot tending the machine, which makes it possible to further reduce the cycle time for producing or processing the product.

This object is achieved with a method as defined in claim 14.

Such a method comprises: running one or more control programs, including movement instructions for the robot as well as movement instructions for the machine part, on the robot controller, generating control signals to the drive unit of the robot based on the movement instructions for the robot, generating said reference value based on the movement instructions for the machine part, and transmitting the reference value to the regulator controlling the movements of the actuator.

The invention is particularly useful for a molding machine such as a die casting machine or an injection-molding machine. A molding machine includes a plurality of actuators such as an actuator for opening and closing the protective door, an actuator for providing opening and closing of the mold, an actuator for providing movements of extraction pins, which releases the product from the mold, and an actuator that discharges an injection mechanism. Preferably, all those actuators are controlled from the robot controller. Thereby it is possible to synchronize all the movements and optimize the cycle time. The molding machine does not need to have any controller of its own, since it uses the robot controller.

Other advantageous applications for the present invention are in connection with a scrap press and ladeling of molten metal. A scrap press includes an actuator adapted to provide opening and closing of the scrap press and the robot is adapted to load and unload the scrap press. Mostly the ladeling process is either manual or comprises a mechanical device controlled by relays or sequential PLC-logic. In order to decrease cycle time and achieve better performance, position and speed of the device's movement should be controlled by the robot controller.

Another advantageous application for the present invention is in connection with a scrap press. A scrap press includes an actuator adapted to provide opening and closing of the scrap press and the robot is adapted to load and unload the scrap press.

### BRIEF DESCRIPTION OF THE DRAWINGS

The invention will now be explained more closely by the description of different embodiments of the invention and with reference to the appended figures.
- Fig. 1: shows an industrial system comprising a machine and a robot according to an embodiment of the invention.
- Fig. 2: shows a block diagram of an industrial system according to a first embodiment of the invention.
- Fig. 3: shows a block diagram of an industrial system according to a second embodiment of the invention.
- Fig.4: shows an industrial system including an injection-molding machine according to an embodiment of the invention.
- Fig. 5: shows an industrial system including a scrap press machine according to an embodiment of the invention.

### DETAILED DESCRIPTION OF PREFERRED EMBODIMENTS OF THE INVENTION

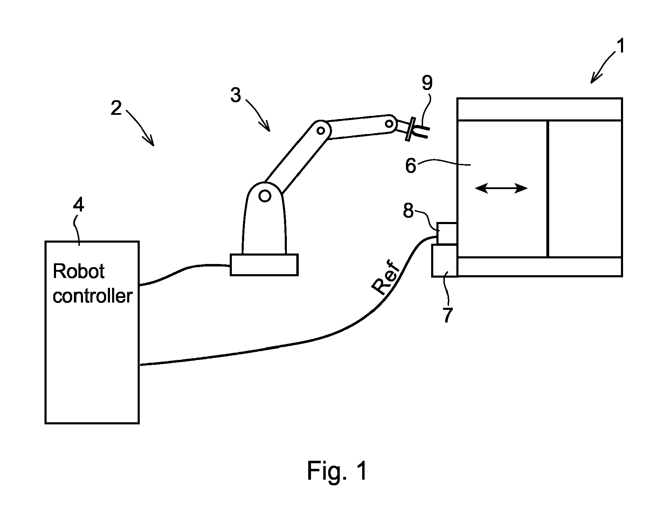

Figure 1 shows an industrial system, according to an embodiment of the invention, comprising a machine 1 for processing or producing a product, and an industrial robot 2 adapted to tend the machine, such as to remove the product from the machine 1 when the product is finished. The industrial robot 2 includes a manipulator 3 and a robot controller 4 for controlling the manipulator 3. The robot controller 4 is connected to the manipulator 3 as well as to the machine 1. The connection is either physical, for example by means of cables, or wireless. The manipulator 3 includes a plurality of robot arms joined with each other so that they are rotatable relative to each other about a plurality of axes. The machine 1 includes a movable part, in this case a protective door 6, an actuator 7, such as a motor, actuating the movements of the protective door 6, and a regulator 8 regulating the movements of the actuator 7, and thereby the movements of the protective door 6, in response to a reference value Ref from the robot controller 4.

The robot 2 is provided with a tool 9, in this case a gripper, adapted to pick the product from the machine 1 and to move it to another place for further processing. The tending of the machine may also include moving a workpiece to the machine and loading the machine with the workpiece. The manipulator includes a plurality of motors actuating the movements of the robot arms. The robot controller 4 includes a drive unit adapted to generate control signals, such as desired motor torques, to the motors located in the manipulator. The control signals are generated based on control programs including movement instructions for the robot.

The robot controller 4 is also adapted to generate reference values for the actuator 7 based on one or more control programs including movement instructions for the movable machine part 6. The reference value from the robot controller 4 is transferred to the regulator 8 of the machine. The machine also includes a measuring device (not shown) arranged to measure the position and/or speed of the movable part 6 and to provide the regulator 8 with information about the actual position and/or speed of the movable machine part 6.

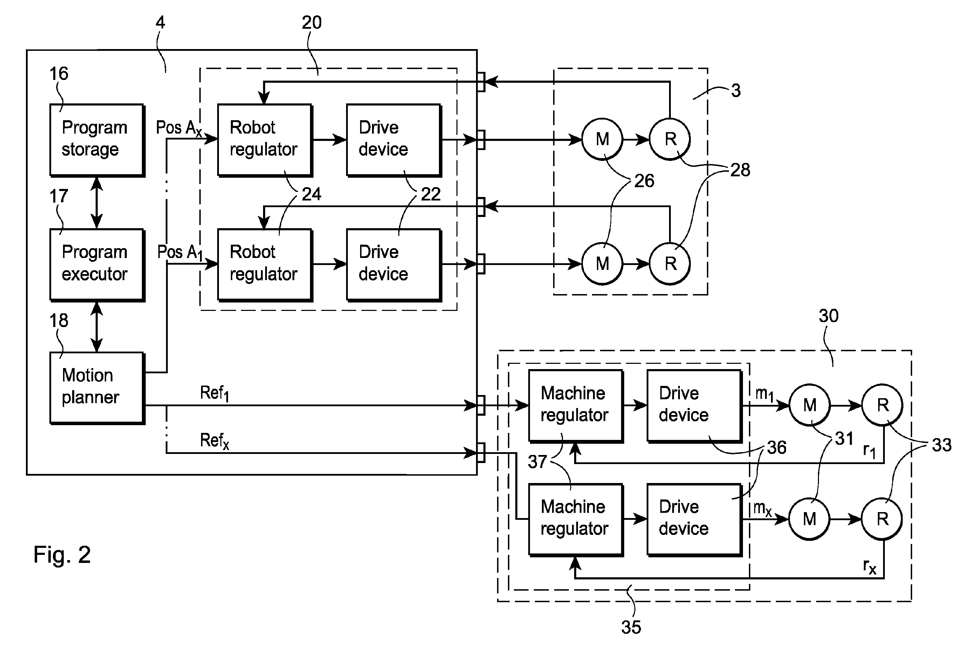

Figure 2 shows a block diagram of an industrial system according to an embodiment of the invention. The robot controller 4 comprises program storage 16 for storage of a plurality of control programs, each program comprising program instructions including movement instructions for the manipulator and/or for the moving machine part or parts. The robot controller 4 further comprises at least one program executor 17 adapted to run the control programs and to generate instructions based on the movement instructions in the control program, and amotion planner 18 adapted to receive the instructions from the program executor 17 and based thereon determine how the manipulator should move in order to be able to execute the movement instructions for the manipulator and determine how the actuator should be actuated in order to execute the movement instructions for the movable machine part or parts. The motion planner 18 is adapted to perform an interpolation of the movements of the manipulator 3 and the movable machine part(s).

In this embodiment, the motors of the manipulator 3 and actuators 31 of the machine are controlled by one single control program including movement instructions for the manipulator as well as for the actuator. In an alternative embodiment, the control system may comprise a plurality of program executors adapted to run the control programs in parallel and a plurality of motion planners adapted to receive instructions from the plurality of program executors and on the basis thereon determine how the manipulator and the movable machine part should be moved in order to synchronize their movements. In this alternative embodiment, different control programs that are run in parallel can control the manipulator and the actuators.

The motion planner 18 determines robot paths, based on the instructions received from the program executer, and generates reference values comprising desired values for position, speed and acceleration of the motors that actuates the movements of the robot axes. The motion planner 18 also plans the movements of the movable machine part(s), based on the instructions received from the program executer 17, and generates reference values Ref1-Refx, including desired values for position and/or speed and/or of the machine actuators 31.

The robot controller further comprises a drive unit 20 for the robot. The drive unit 20 is connected to the manipulator 3 and provides the manipulator with control signals, such as motor references, and power. The drive unit 20 includes a plurality of drive devices 22 and a plurality of regulators 24, which regulate the position of the robot axis in accordance with the reference values received from the motion planner. The robot controller 4 comprises one regulator 24 and one drive device 22 for each axis of the robot. The number of axes of the robot may vary between one and six. Each of the drive devices 22 is connected to one of the regulators 24. Each axis of the robot is provided with a motor 26 actuating the movement of the axis, and a device, e.g a resolver 28, measuring the angle of the axis. The output signals from the resolvers 28 are fed back to the position regulators 24. Reference values PosA₁-PosAₓ for the motors 26 controlling the robot axes are transferred from the motion planner 18 to the regulators 24. The regulators 24 compare the reference values from the motion planner with the measured angular values received from the resolvers 28 and based thereon generates control signals to the drive devices 22.

The robot controller includes software as well as hardware, such as input and output means, a processor unit including one or more central processing units (CPU), for handling main functions of the robot controller such as executing robot control programs, performing path planning, providing orders to the drive unit of the robot regarding movements of the manipulator such as desired position and velocity and generating motor references to the motors of the robot.

The system as shown in figure 2 also comprises a machine 30 including at least two actuators 31 arranged to actuate at least two movable parts (not shown) of the machine 30, and at least two position measuring devices 33 arranged to measure the positions of the movable machine parts. The machine 30 further comprises a drive unit 35 connected to the actuators 31 and providing them with control signals, such as motor references, and power. The drive unit 35 includes at least two drive devices 36 and at least two regulators 37, which regulate the position of the movable machine parts in accordance with reference values Ref1-Refx received from the motion planner 18. The drive devices 36 are for example electrical hydraulic or pneumatic power amplifier. The output signals from the measuring devices 33 are fed back to the machine regulators 37. The machine regulators 37 receive reference values Ref1-Refx from the motion planner 18 of the robot controller 4. The reference values include set point values for the position of the actuators 31 and/or set point values for the speed of actuators 31,32. In this embodiment of the invention, the drive unit 35 of the machine 30 is located outside the robot controller, preferably in the vicinity of the machine.

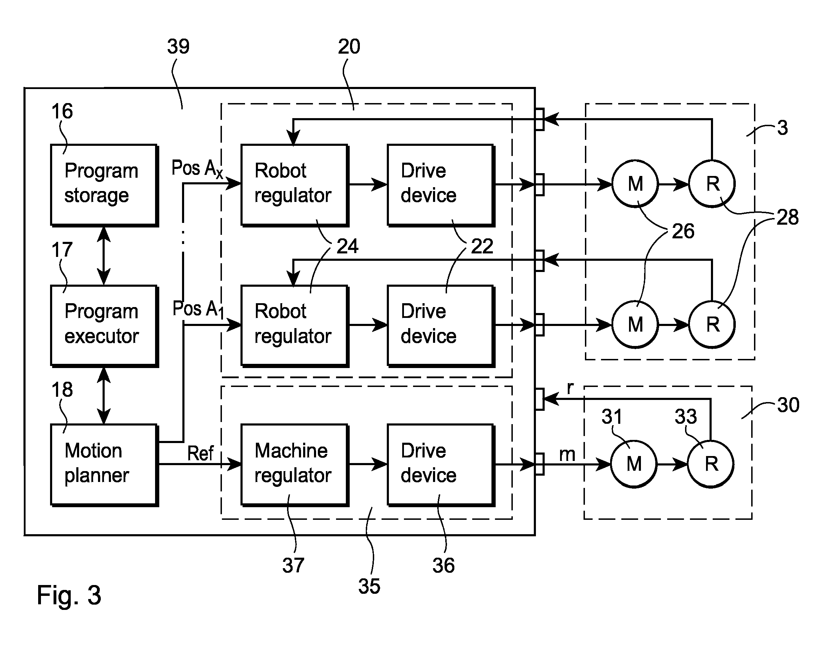

Figure 3 shows another embodiment of the invention, which differs from the embodiment disclosed in figure 2 in that the drive unit 35 of the machine 30 is physically integrated into the robot controller 39. Another difference is that the machine 30 is only provided with one actuator 31 controlled by the robot controller 39. According to an alternative embodiment, the machine regulator 37 is integrated in the robot controller and the machine drive device 36 is located in connection to the machine 30. The drive devices 36 generate control signals, for example, in the form of desired motor torques m₁-mₓ to the actuators 31. The measuring devices 33 provide measuring values r₁-rₓ corresponding to the position of the movable part. The measuring values r₁-rₓ are transmitted to the machine regulators 37.

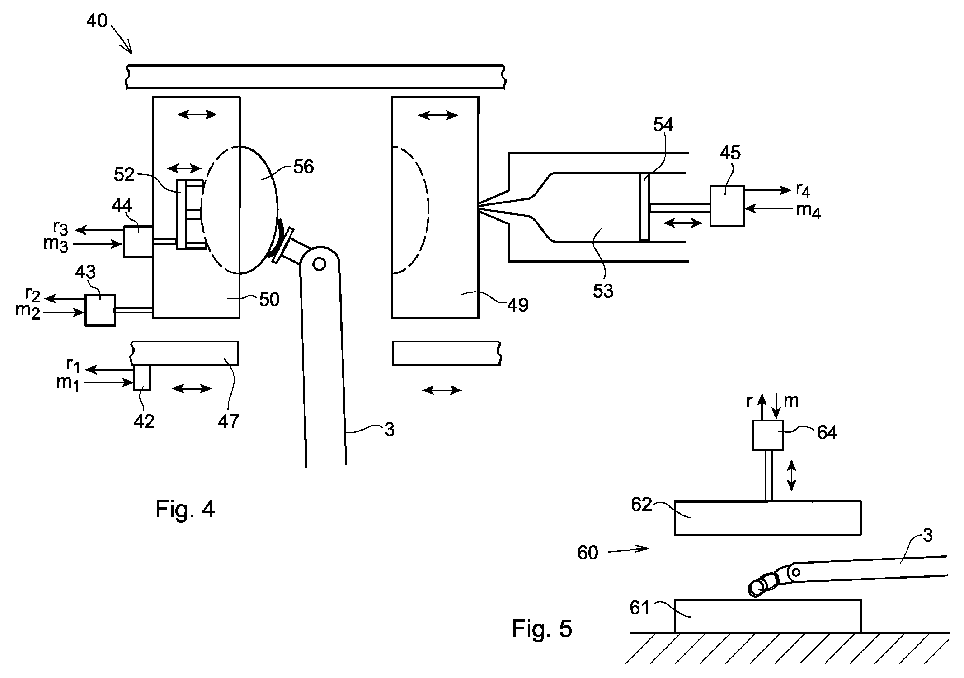

Figure 4 shows an injection-molding machine 40. The molding machine 40 includes four actuators 42,43,44,45. The first actuator 42 is arranged to actuate movements of a protective door 47 and thereby to provide opening and closing of the door. The mold comprises two halves, a stationarily arranged mold half 49 and a movable mold part 50. The second actuator 43 is arranged to actuate movements of the movable mold part 50 and thereby to provide opening and closing of the mold. The third actuator 44 is arranged to actuate movements of extraction pins 52, which release the produced product from the mold. The molding machine 40 includes a cavity 53 for molten material and an injection mechanism 54, which injects the melted material into the mold by means of a pressure change. The fourth actuator 45 is arranged to actuate movements of the injection mechanism 54 and thereby to control the pressure in the cavity 53, in order to control the injection procedure and thus to carry out loading of the mold.

Each of the four actuators 42-45 is provided with control signals, in the form of desired motor torque m₁-m₄ or hydraulic or pneumatic pressures, whatever is suitable, from the robot controller 4. Each actuator is provided with a position, or a pressure measuring device, which provides measurements corresponding to the position of the movable machine part actuated by the actuator. The measuring values r₁-r₄, generated by the measuring devices, are transmitted to the robot controller including a machine drive unit comprising four machine regulators and four machine drive devices. One of the regulators is a pressure regulator connected to the actuator 45. The robot controller produces desired motor torque m₁-m₄ based on the received measurements r₁-r₄ of the position or pressure if applicable of the movable parts of the mold machine and reference values received from the motion planner. The molding machine 40 is tended by a robot 3 in such a way that the robot enters the molding machine and removes the molded product 56 from the mold half 50, and moves the removed product away from the mold to a position outside the molding machine. The movements of the robot has to be synchronized with the opening and closing of the protective door 47, the opening and closing of the mold, and with the movement of the extraction pins 52 in order to avoid collisions between the robot and the protective door, extraction pins and the mold.

In order to optimize the cycle time of the molding, the robot should be programmed to enter the protective door before the door is completely open and the closing of door can be started before the robot arm is completely outside the door. The robot can start entering the machine well before the mold is completely separated, and closing of the mold can be started before the robot arm is completely outside the mold. Preferably, the extraction pins are made to run synchronously with the robot during the release phase. To save time this can be run concurrently with the opening of the mold. In order to reduce the cycle time, control of the injection process is also included into the robot controller. Thereby, the conventional margins are reduced and a substantial amount of cycle time will be saved. The gripping process and the release of the product from the mold can be made more efficient and time-saving. Time and effort used for adjusting robot speed to the extraction pin movement will be reduced and time and optimization of the injection process will also be supported by the invention.

An industrial robot is programmed to carry out work along an operating path. In order to program or teach the robot the work, the robot is manipulated to positions along the desired operating path. These positions are stored as instructions in a memory in the control unit. During operation of the robot, the program instructions are executed, thereby making the robot operate as desired. The machine, which is controlled by the robot controller, can be programmed in the same way as the robot. This means that positions along a movement path are stored as instruction in the memory of the control unit. A control program for the machine and the robot includes instructions regarding desired position of the robot and the movable parts of the machine. The control program can also include instructions regarding the speed of the robot and the machine part. During operation of the machine, the program instructions for the robot and the machine are executed, thereby making the robot and the machine move as desired. The invention makes it easy to program synchronized movements between the robot and the machine. It is also possible to implement speed control of the machine from the robot controller without having a position control of the movements.

The invention is also useful for controlling the motion of a scrap press tended by a robot. Figure 5 shows an example of a scrap press 60 tended by the robot 7. The scrap press 60 includes a stationary part 61 and a movable part 62. The movement of the movable part 62 of the scrap press is controlled by an actuator 64 including a position measuring device (not shown). Control signals, including desired values m for the motor torque, are received from the robot controller, and measuring values r corresponding to the position of the movable part 62 are transmitted to the robot controller. Thereby, it is possible to perform the entering of the robot into the press 60 as well as control of the press movements in a time saving manner.

There are a number of other possible applications for the present invention, for example control of the movements of a ladling device for molten material. Time is to be saved by synchronization of the ladle with the rest of the machinery. Besides the transportation movements, also the tilting of the ladle at filling and pouring could be controlled from the robot controller. It is also possible to control opening and closing of protective doors of a blasting box tended by a robot. The opening and closing of the protective door can then be synchronized with the robot movements and the rest of the machinery. There are also other processes and equipment, like inspection equipment, in and out loading stations etc that beneficially could be controlled from the robot controller.

The present invention is not limited to the embodiments disclosed but may be varied and modified within the scope of the following claims. For example, the robot in the above examples is a serial kinematic robot. For example, it is also possible to use a parallel kinematic robot to tend the machine.

## Claims

1. An industrial system comprising a machine (1;30;40;60) for processing or producing a product, the machine including at least one actuator (7;31,32;42,43,44,45;64) providing a repetitive sequence of movements of a machine part (6;47,50,52,54;62), and a regulator (8;37) controlling the movements of the actuator in response to a reference value (Ref1,Ref2), and an industrial robot (2) adapted to tend the machine, such as to remove the product from the machine, the robot including a drive unit (20) and a robot controller (4,39) adapted to generate control signals to the drive unit based on a control program including movement instructions for the robot, **characterized in that** said robot controller further is adapted to generate said reference value to the regulator based on a control program including movement instructions for said machine part.

2. The system according to claim 1, wherein said regulator is a position regulator and said reference value includes a set point value for the position of the actuator.

3. The system according to any of claims 1-3, wherein said regulator is a speed regulator and said reference value includes a set point value for the speed of the actuator.

4. The system according to claim 1 or 2, wherein said regulator is a pressure regulator and said reference value includes a set point value for the speed and position of the actuator in order to establish a certain pressure build-up.

5. The system according to any of the previous claims, wherein said regulator is integrated in the robot controller.

6. The system according to any of the previous claims, wherein the robot controller comprises
a program storage (16) for storing control programs including movement instructions for the robot and movement instructions for said machine part,
a program executor (17) adapted to execute the movement instructions for the robot and the movement instructions for the machine part, and
a motion planner (18) adapted to determine how the robot should move in order to be able to execute the movement instructions for the robot and on the basis thereon generate said control signals to the drive unit and to determine how the machine part should move in order to be able to execute the movement instructions for the machine part and on the basis thereon generate said reference value to the regulator.

7. The system according to any of the previous claims, wherein said machine for processing or producing a product includes at least two actuators (31,32) and two regulators (37), each regulator regulating the movements of one of the actuators in response to a reference value for the actuator, and said robot controller is adapted to generate said reference values to the regulators based on one or more control programs including movement instructions for said actuators.

8. The system according to any of the previous claims, wherein said actuator is adapted to provide opening and closing movements of the machine part and the robot is adapted to cooperate with the opening and closing movement of the machine part.

9. The system according to any of the previous claims, wherein said machine includes a protective door and said actuator is adapted to provide opening and closing of the protective door.

10. The system according to any of the previous claims, wherein said machine is a molding machine.

11. The system according to claim 10, wherein said molding machine comprises a mould and said actuator is adapted to provide opening and closing of the mold.

12. The system according to claim 10 or 11, wherein said molding machine comprises extraction pins that release the product from the mold and said actuator is adapted to provide movement of the extraction pins.

13. The system according to any of claims 10-12, wherein said molding machine comprises an injection mechanism and said actuator is adapted to discharge the injection mechanism.

14. The system according to any of the previous claims, wherein said machine is a scrap press including an actuator for opening and closing of the scrap press and said robot is adapted to load and unload the scrap press.

15. A method for controlling an industrial system comprising a machine (1;30;40;60) for processing or producing a product, the machine including at least one actuator (7;31,32;42,43,44,45;64) providing a repetitive sequence of movements of a machine part (6;47,50,52,54;62), and a regulator (8;37) controlling the movements of the actuator in response to a reference value (Ref1,Ref2), and an industrial robot (2) adapted to tend the machine, such as to remove the product from the machine, the robot including a drive unit (20) and a robot controller (4,39) controlling the movements of the robot, wherein the method comprises:
- running one or more control programs, including movement instructions for the robot as well as movement instructions for said machine part, on the robot controller,
- generating control signals to the drive unit of the robot based on said movement instructions for the robot,
- generating said reference value based on said movement instructions for the machine part, and
- transmitting said reference value to said regulator controlling the movements of the actuator.

16. The method according to claim 15, wherein said regulator is a position regulator and said reference value includes a set point value for the position of the actuator.

17. The method according to claim 15 or 16, wherein said regulator is a speed regulator and said reference value includes a set point value for the speed of the actuator.

18. The method according to any of claims 15-17, wherein said machine is a molding machine.

19. The method according to claim 18, wherein said molding machine comprises a mould and said actuator is adapted to provide opening and closing of the mold, and said control program includes movement instructions for opening and closing of the mold.

20. The method according to any of claims 15-19, wherein said actuator is adapted to provide opening and closing movements of a protective door and said control program includes movement instructions for the robot as well as movement instructions for the protective door.

## Amended claims

### Amended claims in accordance with Rule 86(2) EPC.

**1.** An industrial system comprising a machine (1;30;40;60) for processing or producing a product, the machine including at least one actuator (7;31,32;42,43,44,45;64) providing a repetitive sequence of movements of a machine part (6;47,50,52,54;62), and a regulator (8;37) controlling the movements of the actuator in response to a reference value (Ref1,Ref2), and an industrial robot (2) adapted to tend the machine, such as to remove the product from the machine, the robot including a drive unit (20) and a robot controller (4,39) comprising a program storage (16) for storing control programs including movement instructions for the robot, a program executor (17) adapted to execute the movement instructions for the robot, and a motion planner (18) adapted to determine how the robot should move in order to be able to execute the movement instructions for the robot and on the basis thereon generate control signals to the drive unit, **characterized in that** said program storage (16) is adapted to store control programs including movement instructions for the robot and movement instructions for said machine part, said program executor (17) is adapted to execute the movement instructions for the machine part, and said motion planner is (18) adapted to determine how the machine part should move in order to be able to execute the movement instructions for the machine part and on the basis thereon generate said reference value to the regulator.

**2.** The system according to claim 1, wherein said regulator is a position regulator and said reference value includes a set point value for the position of the actuator.

**3.** The system according to any of claims 1-3, wherein said regulator is a speed regulator and said reference value includes a set point value for the speed of the actuator.

**4.** The system according to claim 1 or 2, wherein said regulator is a pressure regulator and said reference value includes a set point value for the speed and position of the actuator in order to establish a certain pressure build-up.

**5.** The system according to any of the previous claims, wherein said regulator is integrated in the robot controller.

**6.** The system according to any of the previous claims, wherein said machine for processing or producing a product includes at least two actuators (31,32) and two regulators (37), each regulator regulating the movements of one of the actuators in response to a reference value for the actuator, and said robot controller is adapted to generate said reference values to the regulators based on one or more control programs including movement instructions for said actuators.

**7.** The system according to any of the previous claims, wherein said actuator is adapted to provide opening and closing movements of the machine part and the robot is adapted to cooperate with the opening and closing movement of the machine part.

**8.** The system according to any of the previous claims, wherein said machine includes a protective door and said actuator is adapted to provide opening and closing of the protective door.

**9.** The system according to any of the previous claims, wherein said machine is a molding machine.

**10.** The system according to claim 9, wherein said molding machine comprises a mould and said actuator is adapted to provide opening and closing of the mold.

**11.** The system according to claim 9 or 10, wherein said molding machine comprises extraction pins that release the product from the mold and said actuator is adapted to provide movement of the extraction pins.

**12.** The system according to any of claims 9-11, wherein said molding machine comprises an injection mechanism and said actuator is adapted to discharge the injection mechanism.

**13.** The system according to any of the previous claims, wherein said machine is a scrap press including an actuator for opening and closing of the scrap press and said robot is adapted to load and unload the scrap press.

**14.** A method for controlling an industrial system comprising a molding machine (1;30;40;60) for processing or producing a product, the molding machine including at least one actuator (7;31,32;42,43,44,45;64) providing a repetitive sequence of movements of a molding machine part (6;47,50,52,54;62), and a regulator (8;37) controlling the movements of the actuator in response to a reference value (Ref1,Ref2), and an industrial robot (2) adapted to tend the molding machine, such as to remove the product from the molding machine, the robot including a drive unit (20) and a robot controller (4,39) controlling the movements of the robot, wherein the method comprises:
- running one or more control programs, including movement instructions for the robot as well as movement instructions for said molding machine part, on the robot controller,
- generating control signals to the drive unit of the robot based on said movement instructions for the robot,
- generating said reference value based on said movement instructions for the molding machine part, and
- transmitting said reference value to said regulator controlling the movements of the actuator.

**15.** The method according to claim 14, wherein said regulator is a position regulator and said reference value includes a set point value for the position of the actuator.

**16.** The method according to claim 14 or 15, wherein said regulator is a speed regulator and said reference value includes a set point value for the speed of the actuator.

**17.** The method according to claim 16, wherein said molding molding machine comprises a mould and said actuator is adapted to provide opening and closing of the mold, and said control program includes movement instructions for opening and closing of the mold.

**18.** The method according to any of claims 14-17, wherein said actuator is adapted to provide opening and closing movements of a protective door and said control program includes movement instructions for the robot as well as movement instructions for the protective door.
